# FASCICULE DE BREVET EUROPEEN

(11) **EP 3 648 858 B1**
(45) Date de publication et mention de la délivrance du brevet: **01.11.2023**
(21) Numéro de dépôt: 18749032.1
(22) Date de dépôt: 03.07.2018
(51) Int. Cl.: B01D 11/04, G01N 21/3504

(54) **DISPOSITIF D'EXTRACTION IN SITU DE GAZ DISSOUS ET APPAREIL DE MESURE CORRESPONDANT**
VORRICHTUNG ZUR IN-SITU-EXTRAKTION VON GELÖSTEM GAS UND ENTSPRECHENDE MESSVORRICHTUNG
DEVICE FOR THE IN SITU EXTRACTION OF DISSOLVED GAS AND CORRESPONDING MEASURING APPARATUS

(30) Priorité: 03.07.2017 FR 1756257
(43) Date de publication de la demande: 13.05.2020
(73) Titulaire: Institut Francais de Recherche pour l'Exploitation de la Mer (IFREMER), 92130 Issy-les-Moulineaux (FR)
(72) Inventeur: BIROT, Dominique, 29200 Brest (FR); RUFFINE, Livio, 29200 Brest (FR); RINNERT, Emmanuel, 29217 Le Conquet (FR); PODEUR, Christian, 29200 Brest (FR)
(74) Mandataire: Novagraaf Technologies
(86) Numéro de dépôt international: PCT/FR2018/051659
(87) Numéro de publication internationale: WO 2019/008271

(56) Documents cités:
- EP-A1- 0 020 026
- FR-A1- 2 264 576
- JP-A- 2005 049 279

## Description

### 1. Domaine de l'invention

L'invention concerne le domaine de l'extraction de gaz en milieu liquide. Il concerne plus particulièrement un appareil de mesure comportant un dispositif d'extraction in situ de gaz dissous en milieu liquide.

### 2. Art antérieur

Il est connu des systèmes mettant en œuvre l'extraction de gaz dissous in situ. Cependant, l'environnement aquatique et la pression hydrostatique en profondeur compromettent le fonctionnement de tels systèmes. En particulier, les systèmes de mesure de concentration de gaz in situ présentent un conditionnement résistant à la corrosion et à la pression hydrostatique qui induit une forte hystérésis allongeant le temps de mesure.
Or, l'extraction in situ est intéressante notamment pour effectuer des cartographies fines des ressources en gaz dissous en milieu marin, ce qui nécessite un temps de mesure court.
D'autre part, cet environnement est fragile il est donc nécessaire de ne pas utiliser de produit toxique pour ne pas le polluer.
Un état de la technique est présenté par le document JP2005049279 A.

### 3. Objectifs de l'invention

L'invention propose une solution visant à pallier les inconvénients précités. Un objectif de l'invention est de permettre une extraction in situ de gaz en vue de réaliser des cartographies fines des concentrations en gaz des milieux étudiés, d'exploiter les ressources en gaz des milieux étudiés ou encore les sources de gaz qui alimentent ces milieux étudiés.

### 4. Résumé de l'invention

L'invention concerne un appareil de mesure in situ, c'est-à-dire en environnement aquatique et sous pression hydrostatique en profondeur de la concentration de gaz, l'appareil de mesure comportant un dispositif d'extraction de gaz dissous en milieu liquide et un dispositif de mesure de la concentration en gaz dissous dans le solvant.

Le dispositif d'extraction comportant :
- un réservoir destiné à recevoir un solvant non miscible dans le liquide,
- un canal d'admission de liquide du milieu liquide,
- un module de mise en circulation du solvant et du liquide,
- une enceinte tubulaire destinée à être traversée d'une extrémité à l'autre par un mélange du solvant provenant du réservoir avec le liquide provenant du canal d'admission, enceinte dans laquelle s'opère le transfert du gaz du liquide vers le solvant par contact direct entre le liquide et le solvant,
- un décanteur agencé pour recevoir par une entrée le mélange du solvant avec le liquide puis pour permettre la séparation par gravité du mélange en deux phases dont une première phase plus dense située au fond du décanteur et une deuxième phase plus légère située en surface du décanteur, la première phase étant ensuite évacuée par une première évacuation au fond du décanteur et la deuxième phase étant évacuée par une deuxième évacuation située au-dessus de la première évacuation et destinée à être au-dessus de la séparation entre les deux phases,
- un élément de maintien de la verticalité, la verticalité étant définie par la direction du champ de la pesanteur. Le champ de la pesanteur pointe donc vers le fond ou le bas du décanteur, le sens inverse pointant vers le dessus ou le haut du décanteur. L'élément de maintien de la verticalité comporte un poids et est prévu pour maintenir le décanteur en position verticale lorsqu'il est en fonctionnement.

Un tel appareil de mesure est par exemple utilisé pour l'extraction de méthane ou de dioxyde de carbone en milieu marin et permet une extraction en continu de gaz par exemple pour effectuer une cartographie des ressources en gaz dissous dans le milieu liquide ou pour exploiter des ressources en gaz.

Le solvant est choisi de sorte que la solubilité du gaz dans le solvant est supérieure à celle du gaz dans le liquide par exemple dix fois supérieure. Le solvant utilisé est de préférence un produit inerte, donc non toxique ou polluant comme par exemple un fluorocarbone.

On constate par ailleurs que la solubilité du gaz dans le solvant est plus importante à haute pression.

Selon une réalisation particulière de l'invention, l'élément de maintien de la verticalité comporte un bras en liaison solidaire avec le décanteur et terminé par le poids agencé de manière que le bras soit parallèle à la direction verticale du décanteur.

Selon une réalisation particulière de l'invention, le module de mise en circulation du solvant et du liquide comporte :
- un module de mise en circulation du solvant comportant une première connexion avec le réservoir et une deuxième connexion avec l'enceinte, le module de mise en circulation du solvant aspirant le solvant du réservoir par la première connexion et injectant le solvant dans l'enceinte par la deuxième connexion,
- un module de mise en circulation du liquide comportant une première connexion avec le canal d'admission et une deuxième connexion avec l'enceinte, le module de mise en circulation du liquide aspirant le liquide du canal d'admission par la première connexion et injectant le liquide dans l'enceinte par la deuxième connexion.
La présence de modules de mise en circulation séparés pour le solvant et le liquide permet de gérer finement les débits respectifs du solvant et du liquide.

Selon une réalisation particulière de l'invention, l'enceinte tubulaire s'étend selon une longueur L et présente une section transversale de surface A, le ratio L/A étant supérieur à 100mm⁻¹, et de préférence supérieur à 1000mm⁻¹, mieux encore, supérieur à 2000mm⁻¹.
Un tel ratio L/A assure une surface de contact importante entre le liquide et le solvant et garantit un transfert important de gaz du liquide vers le solvant.

Selon une réalisation particulière de l'invention, le solvant est injecté dans l'enceinte avec un débit Qs et le liquide est injecté dans l'enceinte avec un débit Qe, le ratio (LxA)/Qs étant supérieur à 60s et le ratio (LxA)/Qe étant supérieur à 30s.
De tels ratios (LxA)/Qs et (LxA)/Qe permettent de maintenir le mélange du liquide et du solvant suffisamment longtemps dans l'enceinte tubulaire pour obtenir un transfert important de gaz du liquide vers le solvant.

Selon une réalisation particulière de l'invention, le module de mise en circulation du solvant et/ou du liquide comporte une pompe. Ladite pompe est par exemple une pompe péristaltique ou osmotique et permet de faire circuler du liquide ou du solvant dans une large gamme de débits avec précision.

Selon une réalisation particulière de l'invention, le module de mise en circulation du solvant et/ou du liquide comporte un piston.

L'invention comportant également un dispositif de mesure de la concentration en gaz dissous dans le solvant.
Un tel appareil de mesure permet de réaliser des cartographies précises des concentrations en gaz dans un milieu liquide de manière relativement rapide et simple par rapport aux appareils de l'art antérieur.

Selon une réalisation particulière de l'invention, le dispositif de mesure est un dispositif de mesure optique comportant :
- une cellule de mesure,
- un module de mise en circulation du solvant enrichi en gaz injectant du solvant issu du décanteur dans la cellule de mesure,
- une source lumineuse émettant un faisceau lumineux initial et orientée de manière que le faisceau lumineux initial traverse la cellule de mesure,
- un moyen de mesure de l'intensité lumineuse mesurant l'intensité du faisceau lumineux ayant traversé la cellule de mesure.
Un tel appareil de mesure permet une mesure en continu de la teneur en gaz sans phénomène d'hystérésis.

Selon une réalisation particulière de l'invention, la source lumineuse est une source infrarouge. L'utilisation de lumière infrarouge permet une mesure fiable de la concentration en gaz, notamment pour le méthane et le dioxyde de carbone.

Selon une réalisation particulière de l'invention, le dispositif de mesure comporte :
- une lame séparatrice en amont de la cellule de mesure divisant le faisceau lumineux initial en un faisceau de mesure traversant la cellule de mesure et un faisceau de référence initial ne traversant pas la cellule de mesure ;
- un premier miroir en aval de la cellule de mesure réfléchissant le faisceau de mesure en un faisceau réfléchi en direction de la lame séparatrice ;
- un obturateur présentant un état fermé dans lequel il interrompt le faisceau de mesure avant que le faisceau n'atteigne la cellule de mesure et un état ouvert dans lequel le faisceau de mesure traverse la cellule de mesure ; et
- un deuxième miroir réfléchissant le faisceau de référence initial en direction de la lame séparatrice de manière que la lame séparatrice combine le faisceau réfléchi avec le faisceau de référence réfléchi en un faisceau combiné dont l'intensité lumineuse est ensuite mesurée par le moyen de mesure.
L'enregistrement d'une mesure d'intensité lumineuse avec l'obturateur dans l'état fermé permet de soustraire l'intensité du faisceau de référence à l'intensité du faisceau combiné afin d'obtenir une mesure d'intensité directement dépendante de la concentration en gaz et d'éliminer toutes les autres variations qui pourraient parasiter la mesure, notamment la variation d'intensité de la source lumineuse. Un étalonnage permet également de fiabiliser la mesure d'intensité.

Selon une réalisation particulière de l'invention, l'appareil de mesure comporte un contenant de liquide comportant le gaz à doser dissous dans une concentration connue, le contenant étant apte à être connecté au canal d'admission en vue de réaliser un étalonnage ou une vérification in situ.

Selon une réalisation particulière de l'invention, l'appareil de mesure comprend en outre un compartiment étanche maintenu à pression atmosphérique comportant des composants électroniques ou optiques sensibles à la pression hydrostatique. La présence d'un compartiment étanche maintenu à pression atmosphérique permet d'effectuer des mesures en profondeur, notamment dans les fonds marins. La cellule de mesure quant à elle est à pression hydrostatique. La cellule est par exemple plongée dans un fluide en équi-pression avec le milieu liquide et contenu dans un capot. Un hublot assure la séparation entre la cellule et le compartiment étanche.

Selon une réalisation particulière de l'invention, l'appareil de mesure comporte un moyen de stockage du solvant une fois la mesure réalisée. Le moyen de stockage du solvant permet de ne pas rejeter le solvant dans le milieu liquide, en particulier lorsque le solvant est polluant.

L'invention concerne également un procédé d'extraction en environnement aquatique et sous pression hydrostatique en profondeur de gaz dissous l'environnement aquatique réalisé avec un appareil de mesure selon l'invention, le procédé d'extraction comportant les étapes suivantes :
- une admission de liquide du milieu liquide,
- une mise en circulation du liquide et d'un solvant,
- un mélange du solvant avec le liquide pour un transfert du gaz du liquide vers le solvant,
- un système de décantation en position verticale pour permettre la séparation par gravité du mélange en deux phases, l'une contenant le solvant enrichi en gaz et une autre comprenant le liquide appauvri en gaz, dont une première phase plus dense située au fond et une deuxième phase plus légère située en surface. Le gaz pourra être par exemple du méthane.

Selon une réalisation particulière de l'invention, le solvant est un fluorocarbone, par exemple le FC770 ou le FC72.

Selon une réalisation particulière de l'invention, le gaz extrait est du méthane ou du dioxyde de carbone.

### 5. Liste des figures

D'autres caractéristiques et avantages innovants ressortiront de la description ci-après, fournie à titre indicatif et nullement limitatif, en référence aux dessins annexés, dans lesquels :
- la figure 1 représente schématiquement un dispositif d'extraction in situ de gaz dissous en milieu aqueux selon un mode de réalisation de l'invention ;
- la figure 2 représente schématiquement un dispositif de mesure de la concentration en gaz selon un premier mode de réalisation de l'invention ;
- la figure 3 représente schématiquement un dispositif de mesure optique de la concentration en gaz fonctionnant en transmission selon un deuxième mode de réalisation de l'invention ;
- la figure 4 représente schématiquement un dispositif de mesure optique de la concentration en gaz fonctionnant en réflexion selon un troisième mode de réalisation de l'invention ;
- la figure 5 représente schématiquement et partiellement une réalisation d'un dispositif de mesure optique selon le troisième mode de réalisation ;
- la figure 6 représente une vue en perspective d'un dispositif de mesure optique selon la réalisation de la figure 5 ; et
- la figure 7 représente une vue en perspective d'un appareil de mesure in situ selon un mode de réalisation de l'invention.

### 6. Description détaillée

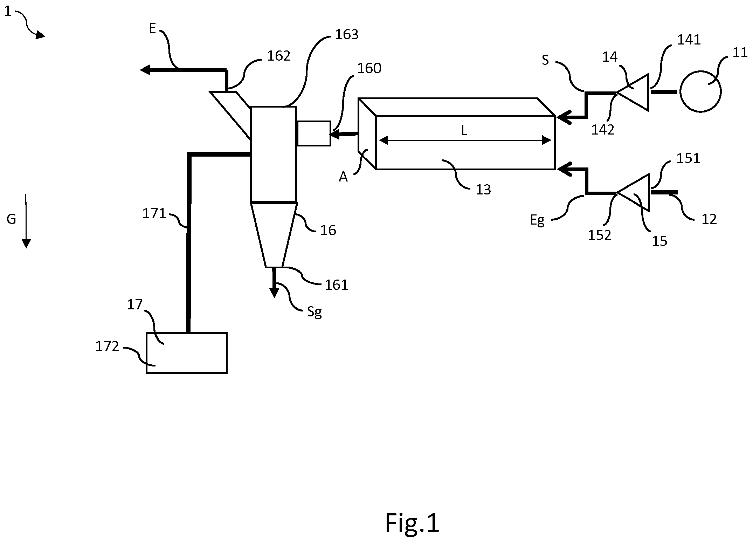

A la figure 1 est représenté un dispositif 1 d'extraction in situ de gaz dissous en milieu aqueux selon un mode de réalisation de l'invention. Le gaz à extraire est par exemple un hydrocarbure comme le méthane. Le milieu aqueux est par exemple le milieu marin, lacustre ou hydrothermal. Plus généralement, le milieu d'extraction est un milieu liquide, par exemple un condensat d'hydrocarbure. L'extraction peut être réalisée en petite quantité par exemple à des fins de mesures ou en grande quantités en vue d'exploiter ou de stocker le gaz extrait.

Dans ce qui suit, la verticalité est définie par la direction du champ de la pesanteur G. Le champ de la pesanteur pointe donc vers le fond ou le bas, le sens inverse pointant vers le dessus ou le haut.

Le dispositif 1 d'extraction comporte un réservoir 11 de solvant, un canal 12 d'admission d'eau, une enceinte 13 tubulaire de mélange du solvant avec l'eau, un module 14 de mise en circulation du solvant, un module 15 de mise en circulation de l'eau, un décanteur 16, un élément de maintien de la verticalité 17.

Le réservoir 11 de solvant est conçu pour contenir un solvant S adapté pour solubiliser le gaz dissous dans le milieu aqueux. Le réservoir est dimensionné de manière à contenir une quantité de solvant adaptée pour absorber la quantité de gaz à extraire. Le solvant est un fluide non miscible dans l'eau, par exemple un fluorocarbone. Le solvant est choisi de sorte que la solubilité du gaz dans le solvant est supérieure à celle du gaz dans le liquide par exemple dix fois supérieure. La solubilisation du gaz dans le solvant doit être rapide, de préférence la solubilisation est effective en quelques secondes.

Le canal 12 d'admission d'eau est conçu pour admettre de l'eau Eg du milieu aqueux chargée en gaz dissous. Selon différentes variantes :
- l'eau Eg passe directement du milieu aqueux au canal d'admission ; ou
- l'eau Eg prélevée dans le milieu aqueux subit des traitements comme par exemple un filtrage, avant de passer dans le canal d'admission ; ou encore
- l'eau Eg est stockée de manière transitoire avant de passer dans le canal d'admission ; ou enfin
- l'eau Eg est stockée avant ou après traitement de manière transitoire et ensuite passe dans le canal d'admission.

L'enceinte 13 tubulaire s'étend suivant une direction principale de longueur L et présente une section transversale de surface A orthogonalement à la direction principale. La section transversale est par exemple en forme de cercle, de carré ou tout autre polygone. L'enceinte 13 est traversée d'une extrémité à l'autre par un mélange du solvant provenant du réservoir avec l'eau provenant du canal d'admission. Le mélange ainsi formé est hétérogène dans la mesure où le solvant S est non miscible avec l'eau Eg. Autrement dit, le mélange comporte une première phase formée par le solvant et une deuxième phase formée par l'eau Eg. Le transfert du gaz de l'eau Eg vers le solvant S s'opère dans l'enceinte 13 par contact direct entre l'eau Eg et le solvant S. Le transfert est favorisé par l'augmentation de la surface de contact entre l'eau et le solvant, c'est-à-dire entre la première phase et la deuxième phase. La surface de contact est d'autant plus grande que les deux phases sont peu épaisses et étendues. Ainsi, un tube présentant une section de faible surface A et de grande longueur L favorise le transfert du gaz de l'eau vers le solvant. Par exemple, le transfert est favorisé pour un ratio L/A supérieur à 100mm⁻¹, et de préférence supérieur à 1000mm⁻¹, mieux encore, supérieur à 2000mm⁻¹. L'enceinte 13 est par exemple un tube en téflon d'une longueur de 1 mètre et d'un diamètre de 0,8 millimètre (mm).

Par ailleurs, une augmentation du temps de contact entre l'eau et le solvant tend à augmenter le transfert de gaz de l'eau vers le solvant. Or, le solvant étant injecté dans l'enceinte avec un débit Qs et l'eau étant injectée dans l'enceinte avec un débit Qe, la durée de traversée de l'enceinte tubulaire par le solvant est donnée par le rapport (LxA)/Qs et la durée de traversée de l'enceinte tubulaire par l'eau est donnée par le rapport (LxA)/Qe. Par conséquent, l'augmentation des ratios (LxA)/Qs et (LxA)/Qe favorise le transfert du gaz de l'eau vers le solvant. Par exemple, le transfert est favorisé pour un ratio (LxA)/Qs supérieur à 60 secondes (s) et un ratio (LxA)/Qe supérieur à 30 secondes (s) .

Selon une variante non représentée, l'enceinte 13 comporte des aspérités en son sein ou contient des objets solides, par exemple de petites billes, modifiant les caractéristiques du fluide la traversant de manière à augmenter la surface de contact entre l'eau et le solvant. Cette variante permet en particulier de s'affranchir des contraintes de ratios L/A, (LxA)/Qs et (LxA)/Qe.

Le module 14 de mise en circulation du solvant comporte une première connexion 141 avec le réservoir 11 et une deuxième connexion 142 avec l'enceinte 13. Le module 14 de mise en circulation du solvant aspire le solvant S du réservoir 11 par la première connexion 141 et injecte le solvant S dans l'enceinte 13 par la deuxième connexion 142. Le module 14 de mise en circulation du solvant est par exemple une pompe ou un ensemble comportant un conduit souple et un module de clampage permettant de propulser un fluide d'une extrémité à l'autre du conduit souple en clampant progressivement le conduit souple d'une extrémité à l'autre.

Le module 15 de mise en circulation de l'eau comporte une première connexion 151 avec le canal 12 d'admission et une deuxième connexion 152 avec l'enceinte 13. Le module 15 de mise en circulation de l'eau aspire l'eau Eg du canal 12 d'admission par la première connexion 151 et injecte l'eau Eg dans l'enceinte 13 par la deuxième connexion 152. Le module 15 de mise en circulation de l'eau est par exemple une pompe ou un ensemble comportant un conduit souple et un module de clampage permettant de propulser un fluide d'une extrémité à l'autre du conduit souple en clampant progressivement le conduit souple d'une extrémité à l'autre.

Le décanteur 16 est agencé pour recevoir par une entrée 160 le mélange du solvant S avec l'eau Eg puis pour permettre la séparation par gravité du mélange en deux phases dont une première phase plus dense située au fond du décanteur et une deuxième phase plus légère située en surface du décanteur, la première phase étant ensuite évacuée par une première évacuation 161 au fond du décanteur et la deuxième phase étant évacuée par une deuxième évacuation 162 située au-dessus de la première évacuation et destinée à être au-dessus de la séparation entre les deux phases. Dans l'exemple représenté, le solvant présente une densité plus importante que l'eau par conséquent, le solvant enrichi en gaz Sg est évacué par la première évacuation 161 et l'eau appauvrie en gaz E est évacuée par la deuxième évacuation 162. En variante, si le solvant présente une densité plus faible que le liquide du milieu, la première évacuation 161 permet d'évacuer le liquide et la deuxième évacuation 162 permet d'évacuer le solvant.

Dans l'exemple de la figure 1, le décanteur 16 comporte une face supérieure 163 et la deuxième évacuation est placée de manière à être tangente à la face supérieure 163 du décanteur 16. Les débits Qs et Qe sont adaptés de sorte à maintenir la surface de séparation des phases entre la première évacuation 161 et la deuxième évacuation 162. Pour fonctionner, le décanteur doit être maintenu vertical malgré les turbulences du milieu aqueux dans lequel se trouve le dispositif 1 d'extraction.

L'élément de maintien de la verticalité 17 assure le maintien de la verticalité du décanteur 16. L'élément de maintien de la verticalité comporte par exemple un bras 171 en liaison solidaire avec le décanteur 16 et terminé par un poids 172 agencé de manière que le bras 171 soit parallèle à la direction verticale du décanteur. Le poids maintient le bras 171 et donc la direction verticale du décanteur alignés avec le champ de la pesanteur.

Selon un mode de réalisation de l'invention non représenté, le dispositif d'extraction est dimensionné pour extraire des quantités importantes de gaz présentes dans les fonds marins en vue d'exploiter ou de stocker le gaz par exemple pour constituer des réserves énergétiques d'hydrocarbure ou éliminer de ce milieu des composés chimiques favorisant le réchauffement climatique. Dans ce cas, le gaz dissous dans le solvant est par exemple récupéré lors d'un dégazage en surface, le dégazage résultant de la diminution de la solubilité du gaz dans le solvant au fur et à mesure que la pression diminue lors de la remontée en surface. Le solvant, une fois le gaz extrait, peut être soit réemployé directement dans le processus, soit stocké en vue d'être recyclé ou évacué.

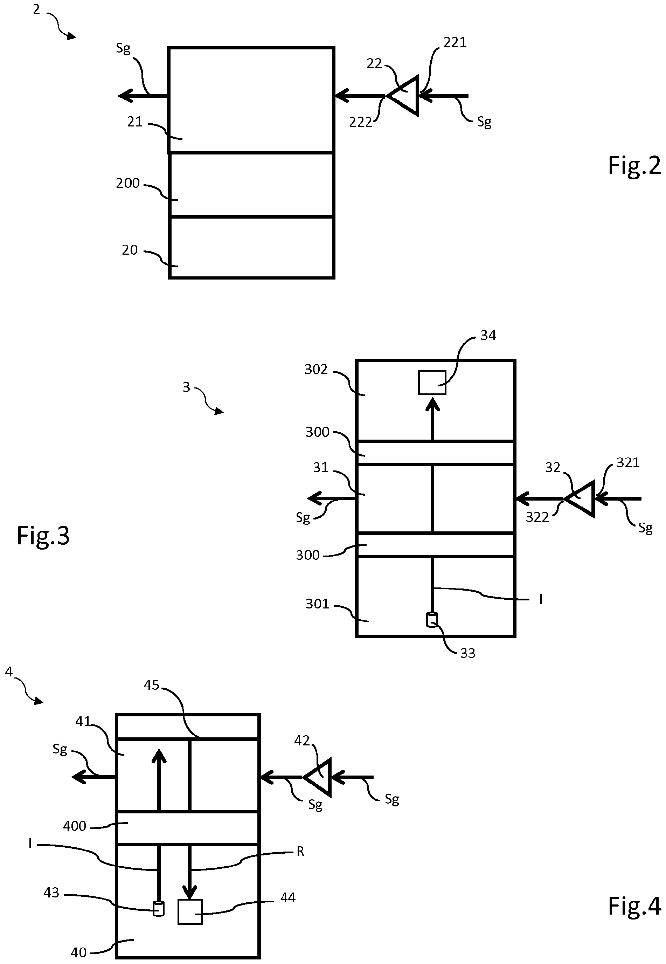

Selon un premier mode de réalisation de l'invention, le dispositif 1 d'extraction est associé avec un dispositif 2 de mesure de la concentration en gaz représenté à la figure 2 pour former un appareil de mesure. Le dispositif 2 de mesure de la concentration en gaz comporte une cellule 21 de mesure adaptée à la pression hydrostatique et destinée à recevoir le solvant enrichi en gaz Sg issu du décanteur 16 du dispositif 1 d'extraction pour effectuer une mesure de la concentration en gaz dans ce solvant Sg. Le dispositif 2 de mesure de la concentration en gaz comporte en outre un module 22 de mise en circulation du solvant enrichi en gaz Sg, un compartiment étanche 20 maintenu à pression atmosphérique comportant des composants électroniques ou optiques sensibles à la pression hydrostatique et une interface 200 mécanique ou opto-mécanique séparant la cellule 21 de mesure à pression hydrostatique du compartiment étanche 20 maintenu à pression atmosphérique.

Le module 22 de mise en circulation du solvant enrichi en gaz Sg comporte une première connexion 221 avec le dispositif 1 d'extraction et une deuxième connexion 222 avec la cellule 21 de mesure. Le module 22 de mise en circulation du solvant enrichi en gaz Sg aspire le solvant enrichi en gaz Sg du dispositif 1 d'extraction par la première connexion 221 et injecte le solvant enrichi en gaz Sg dans la cellule 21 de mesure par la deuxième connexion 222. Le module 22 de mise en circulation du solvant enrichi en gaz Sg est par exemple une pompe, un vérin comportant un piston, une seringue ou un ensemble comportant un conduit souple et un module de clampage permettant de propulser un fluide d'une extrémité à l'autre du conduit souple en clampant progressivement le conduit souple d'une extrémité à l'autre.

Dans la cellule 21 de mesure, le solvant enrichi en gaz Sg est exposé à un rayonnement ou mis en contact avec un composant sensible à la teneur en gaz. C'est-à-dire que le rayonnement ou le composant présente une propriété physique, chimique ou mécanique qui varie en fonction de la teneur en gaz. Le dispositif 2 de mesure comporte en outre des moyens de quantifier les variations de la propriété physique, - chimique ou mécanique affectée par la teneur en gaz. Le dispositif 2 comporte également des moyens d'étalonnage permettant de corréler les variations de ladite propriété avec la teneur en gaz afin de permettre au dispositif 2 de mesure de fournir une mesure de la teneur en gaz. Le composant est par exemple un composé à effet de surface ou un microsystème électromécanique.

Selon un deuxième mode de réalisation de l'invention, le dispositif 1 d'extraction est associé avec un dispositif 3 de mesure optique de la concentration en gaz fonctionnant en transmission représenté à la figure 3 pour former un appareil de mesure. Le dispositif 3 de mesure de la concentration en gaz comporte une cellule 31 de mesure adaptée à la pression hydrostatique et destinée à recevoir le solvant enrichi en gaz Sg issu du décanteur 16 du dispositif 1 d'extraction pour effectuer une mesure de la concentration en gaz dans ce solvant Sg. Le dispositif 3 de mesure optique de la concentration en gaz comporte en outre un module 32 de mise en circulation du solvant enrichi en gaz Sg, un premier compartiment étanche 301 et un deuxième compartiment étanche 302 placés de part et d'autre de la cellule 32 de mesure et maintenus à pression atmosphérique comportant des composants électroniques ou optiques sensibles à la pression hydrostatique et deux interfaces 300 opto-mécaniques séparant la cellule 31 de mesure à pression hydrostatique respectivement du premier compartiment étanche 301 et du deuxième compartiment étanche 302.

Le module 32 de mise en circulation du solvant enrichi en gaz Sg comporte une première connexion 321 avec le dispositif 1 d'extraction et une deuxième connexion 322 avec la cellule 31 de mesure. Le module 32 de mise en circulation du solvant enrichi en gaz Sg aspire le solvant enrichi en gaz Sg du dispositif 1 d'extraction par la première connexion 321 et injecte le solvant enrichi en gaz Sg dans la cellule 31 de mesure par la deuxième connexion 322. Le module 32 de mise en circulation du solvant enrichi en gaz Sg est par exemple une pompe, un vérin comportant un piston, une seringue ou un ensemble comportant un conduit souple et un module de clampage permettant de propulser un fluide d'une extrémité à l'autre du conduit souple en clampant progressivement le conduit souple d'une extrémité à l'autre.

Dans la cellule 31 de mesure, le solvant enrichi en gaz Sg est exposé à un faisceau lumineux initial I émis par une source lumineuse 33 placée dans le premier compartiment étanche 301, le faisceau lumineux initial I étant sensible à la teneur en gaz. La source lumineuse 33 est orientée de manière que le faisceau lumineux initial traverse la cellule de mesure depuis le premier compartiment étanche 301 vers le deuxième compartiment étanche 302. Le dispositif 3 de mesure optique de la concentration en gaz comporte également un moyen de mesure 34 de l'intensité lumineuse placé dans le deuxième compartiment étanche 302. Le moyen de mesure 34 de l'intensité lumineuse mesure l'intensité du faisceau lumineux ayant traversé la cellule de mesure, l'intensité lumineuse ainsi mesurée étant corrélée à la teneur en gaz.

Selon un troisième mode de réalisation de l'invention, le dispositif 1 d'extraction est associé avec un dispositif 4 de mesure optique de la concentration en gaz fonctionnant en réflexion représenté à la figure 4 pour former un appareil de mesure. Le dispositif 4 de mesure de la concentration en gaz comporte une cellule 41 de mesure adaptée à la pression hydrostatique et destinée à recevoir le solvant enrichi en gaz Sg issu du décanteur 16 du dispositif 1 d'extraction pour effectuer une mesure de la concentration en gaz dans ce solvant Sg. Le dispositif 4 de mesure optique de la concentration en gaz comporte en outre un miroir 45 placé sur une face de la cellule 41 de mesure, un module 42 de mise en circulation du solvant enrichi en gaz Sg, un compartiment étanche 40 opposé au miroir 45 par rapport à la cellule 41 de mesure et maintenu à pression atmosphérique comportant des composants électroniques ou optiques sensibles à la pression hydrostatique et une interface 400 opto-mécanique séparant la cellule 41 de mesure à pression hydrostatique du compartiment étanche 40.

Le module 42 de mise en circulation du solvant enrichi en gaz Sg comporte une première connexion 421 avec le dispositif 1 d'extraction et une deuxième connexion 422 avec la cellule 41 de mesure. Le module 42 de mise en circulation du solvant enrichi en gaz Sg aspire le solvant enrichi en gaz Sg du dispositif 1 d'extraction par la première connexion 421 et injecte le solvant enrichi en gaz Sg dans la cellule 41 de mesure par la deuxième connexion 422. Le module 42 de mise en circulation du solvant enrichi en gaz Sg est par exemple une pompe, un vérin comportant un piston, une seringue ou un ensemble comportant un conduit souple et un module de clampage permettant de propulser un fluide d'une extrémité à l'autre du conduit souple en clampant progressivement le conduit souple d'une extrémité à l'autre.

Dans la cellule 41 de mesure, le solvant enrichi en gaz Sg est exposé à un faisceau lumineux initial I émis par une source lumineuse 43 placée dans le compartiment étanche 40, le faisceau lumineux initial I étant sensible à la teneur en gaz. La source lumineuse 43 est orientée de manière que le faisceau lumineux initial traverse la cellule 41 de mesure et soit réfléchi par le miroir 45 en un faisceau lumineux réfléchi R. Le faisceau lumineux réfléchi R traverse la cellule 41 de mesure puis pénètre dans le compartiment étanche 40. Le dispositif 4 de mesure optique de la concentration en gaz comporte également un moyen de mesure 44 de l'intensité lumineuse placé dans le compartiment étanche 40. Le moyen de mesure 44 de l'intensité lumineuse mesure l'intensité du faisceau lumineux réfléchi ayant traversé la cellule de mesure, l'intensité lumineuse ainsi mesurée étant corrélée à la teneur en gaz.

Dans les modes de réalisation décrits précédemment, la source lumineuse est par exemple une source de lumière infrarouge. Le gaz dont la concentration est mesurée est par exemple du méthane ou du dioxyde de carbone. Par ailleurs, après avoir traversé la cellule de mesure, le solvant est stocké en vue d'être recyclé ou évacué.

En variante, la mesure de concentration est réalisée par réflexion ou par diffusion du rayonnement infrarouge. Une mesure par diffusion Raman est également possible.

L'utilisation d'une source non infrarouge est également possible, par exemple une source comportant un laser impulsionnel excitant des composants non linéaires qui réémettent à des longueurs d'onde différentes du rayonnement excitateur.

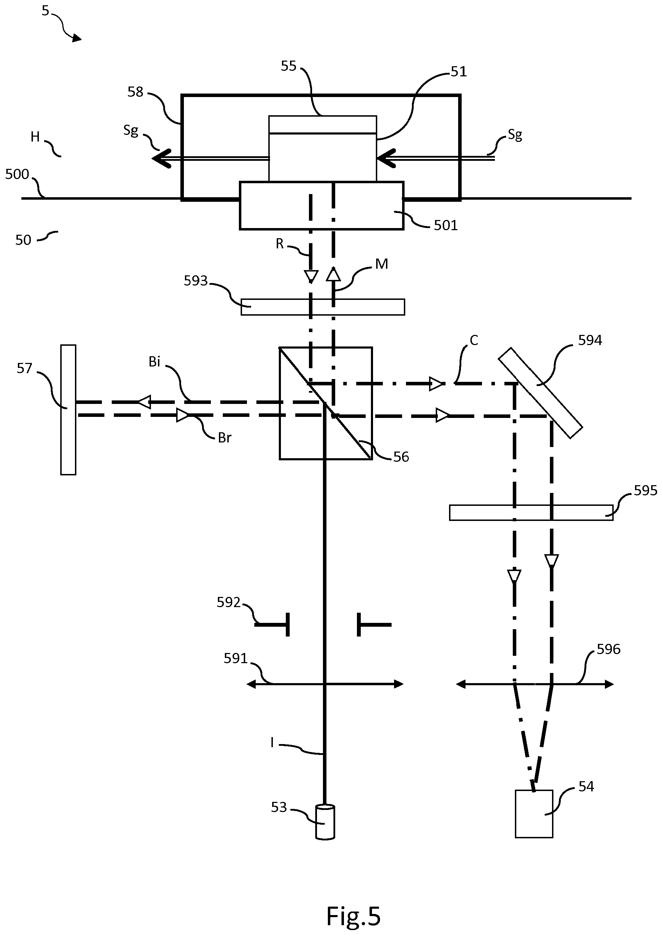

A la figure 5 est représentée partiellement une réalisation d'un dispositif 5 de mesure optique selon le troisième mode de réalisation. Le dispositif 5 de mesure optique comporte un compartiment étanche 50, une cellule 51 de mesure protégée par un capot 58 comportant un liquide inerte en équipression, une interface 500 opto-mécanique séparant le compartiment étanche du milieu H à pression hydrostatique, l'interface présentant notamment un hublot 501 transparent dans l'infrarouge assurant la séparation entre le compartiment étanche 50 à pression atmosphérique et la cellule 51 de mesure à pression hydrostatique. La cellule 51 comporte un conduit d'alimentation en solvant dont la teneur en gaz est à mesurer et un conduit d'évacuation du solvant permettant d'acheminer le solvant entre l'extérieur du capot 58 et la cellule (non représentés). La cellule est étanche vis-à-vis du liquide inerte contenu dans le capot 58. Le liquide inerte est maintenu en équi-pression grâce à l'équilibrage de la pression entre l'extérieur et l'intérieur du capot par l'intermédiaire d'une zone déformable ou d'une réserve de liquide intégrée dans le capot. Le dispositif 5 comporte également un premier miroir 55 placé sur une face de la cellule 51 de mesure opposée au hublot 501 par rapport à la cellule 51. Le dispositif 5 de mesure optique comporte en outre un système optique placé dans le compartiment étanche 50. Le système optique comporte une source lumineuse 53 émettant un faisceau lumineux initial I. Le faisceau initial I traverse une lentille de collimation 591 puis un diaphragme 592 avant d'être séparé en un faisceau de référence initial Bi et un faisceau de mesure M par une lame séparatrice 56. Le faisceau de référence initial Bi est ensuite réfléchi en un faisceau de référence réfléchi Br par un deuxième miroir en direction de la lame séparatrice 56. Quant au faisceau de mesure M, il traverse un obturateur 593, puis le hublot 501 avant de traverser la cellule 51 de mesure et d'être réfléchi par le premier miroir 55 en un faisceau réfléchi R. Le faisceau réfléchi R traverse l'obturateur 593 avant d'atteindre la lame séparatrice 56 pour être recombiné avec le faisceau de référence réfléchi Br pour former un faisceau combiné C. Le faisceau combiné C est ensuite réfléchi par un troisième miroir 594 en direction d'un filtre optique 595 avant de traverser une lentille de focalisation 596 et d'être intercepté par un moyen de mesure 54 de l'intensité lumineuse. L'obturateur présente un état fermé dans lequel il interrompt le faisceau de mesure avant que le faisceau n'atteigne la cellule de mesure et un état ouvert dans lequel le faisceau de mesure traverse la cellule de mesure. L'enregistrement d'une mesure d'intensité lumineuse avec l'obturateur dans l'état fermé permet de soustraire l'intensité du faisceau de référence à l'intensité du faisceau combiné afin d'obtenir une mesure d'intensité par le moyen de mesure 54 directement dépendante de la concentration en gaz et d'éliminer toutes les autres variations qui pourraient parasiter la mesure, notamment la variation d'intensité de la source lumineuse. Un étalonnage permet également de fiabiliser la mesure d'intensité.

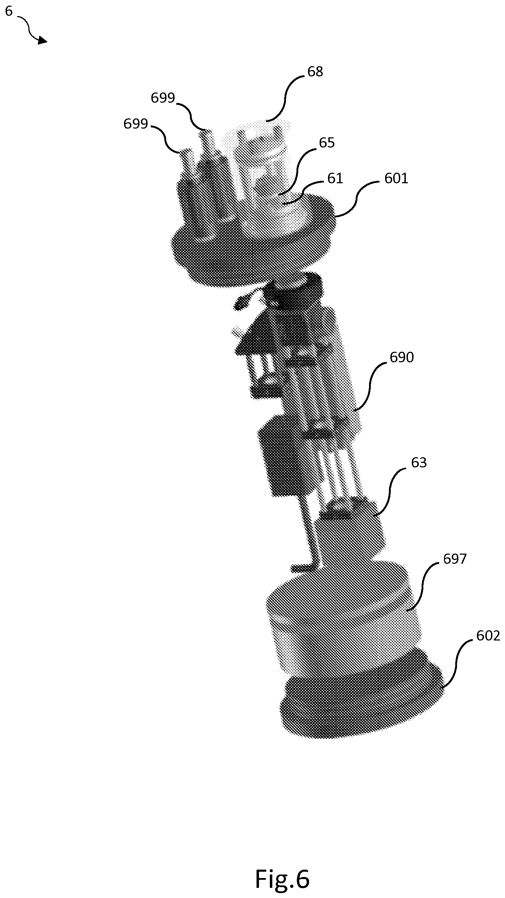

La figure 6 représente un dispositif 6 de mesure optique selon la réalisation de la figure 5. Le dispositif 6 de mesure comporte un compartiment étanche (non représenté) en forme de cylindre fermé par un premier couvercle 601 à une première extrémité du cylindre et par un deuxième couvercle 602 à une deuxième extrémité du cylindre. Le compartiment étanche comporte un système optique 690 comprenant notamment une source lumineuse 63 émettant dans le domaine infra-rouge. Le compartiment étanche comporte en outre un support 697 pour une carte électronique utilisée en particulier pour le traitement des données de mesure. Sur une face extérieure du premier couvercle 601 est montée la cellule 61 de mesure équipée d'un miroir 65. Le compartiment étanche est destiné à être maintenu à la pression atmosphérique tandis que la cellule 61 de mesure est à pression hydrostatique. La cellule 61 de mesure est protégée par un capot 68 comportant un liquide inerte en équipression. Deux connecteurs électriques 699 sont également montés sur le premier couvercle 601 pour alimenter les composants électriques du dispositif 6 de mesure.

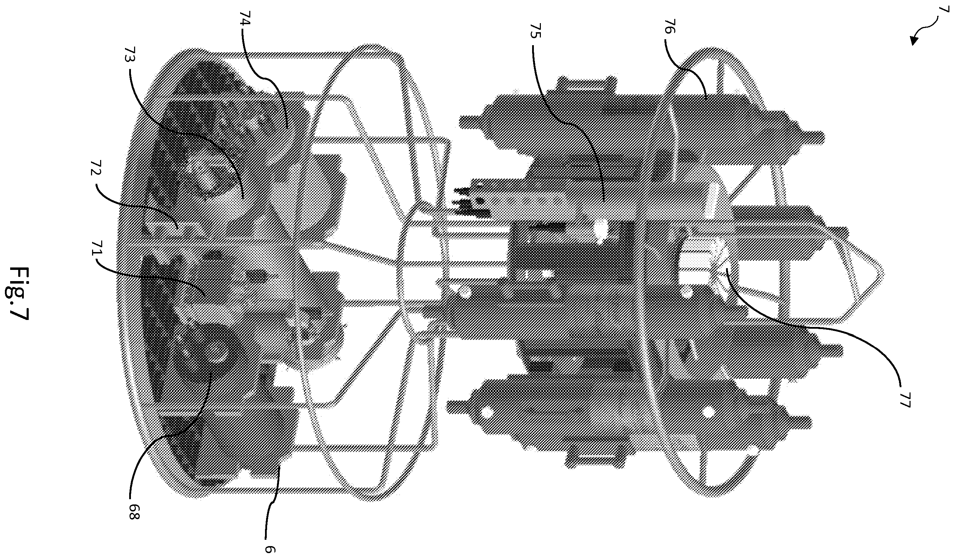

La figure 7 représente une vue en perspective d'un appareil 7 de mesure in situ selon un mode de réalisation de l'invention. L'appareil 7 de mesure comporte un dispositif 71 d'extraction, un dispositif 6 de mesure conforme à celui décrit à la figure 6 et dont le capot 68 protégeant la cellule 61 de mesure est visible. L'appareil 7 de mesure comporte en outre un altimètre 72, un caisson d'alimentation en énergie 73, un caisson de contrôle 74 comportant les ordinateurs embarqués, un ensemble de capteurs 75 de température, de pression et de conductivité, des bouteilles de prélèvement 76 et une rosette 77 gérant les ouvertures et fermetures des bouteilles de prélèvement 76. L'appareil 7 de mesure est destiné à être amarré à un navire en surface pour effectuer des mesures et des prélèvements dans la colonne d'eau entre la surface et le fond de la mer.

## Revendications

1. Appareil de mesure in situ de la concentration de gaz en environnement aquatique et sous pression hydrostatique comportant :
- un dispositif d'extraction (1) de gaz dissous en milieu liquide, le dispositif d'extraction (1) comportant :
- un réservoir (11) destiné à recevoir un solvant non miscible dans le liquide,
- un canal (12) d'admission de liquide du milieu liquide,
- un module (14, 15) de mise en circulation du solvant et du liquide,
- et un dispositif de mesure (2, 3, 4, 5, 6) de la concentration en gaz dissous dans le solvant;
l'appareil de mesure étant **caractérisé en ce que** le dispositif d'extraction (1) comporte en outre :
une enceinte (13) tubulaire destinée à être traversée d'une extrémité à l'autre par un mélange du solvant provenant du réservoir (11) avec le liquide provenant du canal (12) d'admission pour un transfert du gaz du liquide vers le solvant,
- un décanteur (16) agencé pour recevoir par une entrée (160) le mélange du solvant avec le liquide puis pour permettre la séparation par gravité du mélange en deux phases dont une première phase plus dense, contenant le solvant enrichi en gaz, située au fond du décanteur et une deuxième phase plus légère, comprenant le liquide appauvri en gaz, située en surface du décanteur, la première phase étant ensuite évacuée par une première évacuation (161) et la deuxième phase étant évacuée par une deuxième évacuation (162) située au-dessus de la première évacuation,
- et un élément de maintien de la verticalité (17) comportant un bras (171) en liaison solidaire avec le décanteur (16) et terminé par le poids (172) agencé de manière que le bras (171) soit parallèle à la direction verticale du décanteur,
**en ce que** le dispositif de mesure est un dispositif (3, 4, 5, 6) de mesure optique comportant :
- une cellule (31, 41, 51, 61) de mesure,
- un module (32, 42) de mise en circulation du solvant enrichi en gaz injectant du solvant issu du décanteur (16) dans la cellule (31, 41, 51, 61) de mesure,
- une source lumineuse (33, 43, 53, 63) émettant un faisceau lumineux initial et orientée de manière que le faisceau lumineux initial traverse la cellule (31, 41, 51, 61) de mesure,
- un moyen de mesure (34, 44, 54) de l'intensité lumineuse mesurant l'intensité du faisceau lumineux ayant traversé la cellule (31, 41, 51, 61) de mesure,
**et en ce qu'il** comprend en outre un compartiment étanche (20, 301, 302, 40, 50) maintenu à pression atmosphérique comportant des composants électroniques ou optiques sensibles à la pression hydrostatique.

2. Appareil de mesure selon la revendication 1, **caractérisé en ce que** le module de mise en circulation du solvant et du liquide comporte :
- un module (14) de mise en circulation du solvant comportant une première connexion (141) avec le réservoir (11) et une deuxième connexion (142) avec l'enceinte (13), le module (14) de mise en circulation du solvant aspirant le solvant du réservoir (11) par la première connexion (141) et injectant le solvant dans l'enceinte (13) par la deuxième connexion (142),
- un module (15) de mise en circulation du liquide comportant une première connexion (151) avec le canal (12) d'admission et une deuxième connexion (152) avec l'enceinte (13), le module (15) de mise en circulation du liquide aspirant le liquide du canal (12) d'admission par la première connexion (151) et injectant le liquide dans l'enceinte (13) par la deuxième connexion (152).

3. Appareil de mesure selon la revendication 1 ou 2, **caractérisé en ce que** l'enceinte tubulaire s'étend selon une longueur L et présente une section transversale de surface A, le ratio L/A étant supérieur à 100mm⁻¹, et de préférence supérieur à 1000mm⁻¹, mieux encore, supérieur à 2000mm⁻¹.

4. Appareil de mesure selon l'une quelconque des revendications précédentes, **caractérisé en ce que** le module (14, 15) de mise en circulation du solvant et du liquide comporte une pompe.

5. Appareil de mesure selon la revendication 1, **caractérisé en ce que** la source lumineuse (33, 43, 53, 63) est une source infrarouge.

6. Appareil de mesure selon la revendication 1, **caractérisé en ce que** le dispositif de mesure (1) comporte en outre :
- une lame séparatrice (56) en amont de la cellule (51) de mesure divisant le faisceau lumineux initial en un faisceau de mesure traversant la cellule (51) de mesure et un faisceau de référence initial ne traversant pas la cellule (51) de mesure ;
- un premier miroir (55) en aval de la cellule (51) de mesure réfléchissant le faisceau de mesure en un faisceau réfléchi en direction de la lame séparatrice (56) ;
- un obturateur (593) présentant un état fermé dans lequel il interrompt le faisceau de mesure avant que le faisceau n'atteigne la cellule (51) de mesure et un état ouvert dans lequel le faisceau de mesure traverse la cellule (51) de mesure ; et
- un deuxième miroir (57) réfléchissant le faisceau de référence initial en direction de la lame séparatrice (56) de manière que la lame séparatrice (56) combine le faisceau réfléchi avec le faisceau de référence réfléchi en un faisceau combiné dont l'intensité lumineuse est ensuite mesurée par le moyen de mesure (54).

7. Procédé d'extraction en environnement aquatique et sous pression hydrostatique en profondeur de gaz dissous dans l'environnement aquatique avec un appareil de mesure selon l'une quelconque des revendications précédentes, **caractérisé en ce que** le procédé d'extraction comporte les étapes suivantes:
- une admission de liquide du milieu liquide,
- une mise en circulation du liquide et d'un solvant,
- un mélange du solvant avec le liquide pour un transfert du gaz du liquide vers le solvant,
- un système de décantation en position verticale pour permettre la séparation par gravité du mélange en deux phases, l'une contenant le solvant enrichi en gaz et une autre comprenant le liquide appauvri en gaz, dont une première phase plus dense située au fond et une deuxième phase plus légère située en surface.

8. Procédé d'extraction selon la revendication précédente, **caractérisé en ce que** le solvant est injecté dans l'enceinte avec un débit Qs et le liquide est injecté dans l'enceinte avec un débit Qe, le ratio (LxA)/Qs étant supérieur à 100 et le ratio (LxA)/Qe étant supérieur à 100.

9. Procédé d'extraction selon la revendication 8 ou 7, **caractérisé en ce que** le solvant est un produit inerte tel qu'un fluorocarbone.

## Patentansprüche

1. Vorrichtung zur In-situ-Messung der Gaskonzentration in einer Wasserumgebung und unter hydrostatischem Druck, umfassend:
- eine Vorrichtung (1) zur Extraktion von in einem flüssigen Medium gelösten Gas, die Extraktionsvorrichtung (1) umfassend:
- einen Behälter (11), der zum Aufnehmen eines in der Flüssigkeit nicht mischbaren Lösungsmittels bestimmt ist,
- einen Kanal (12) zum Einlass von Flüssigkeit aus dem flüssigen Medium,
- ein Modul (14, 15) zur Zirkulierung des Lösungsmittels und der Flüssigkeit,
- und eine Vorrichtung (2, 3, 4, 5, 6) zur Messung der Konzentration des in dem Lösungsmittel gelösten Gases;
wobei die Messvorrichtung **dadurch gekennzeichnet ist, dass** die Extraktionsvorrichtung (1) ferner umfasst:
- ein röhrenförmiges Gehäuse (13), das bestimmt ist, von einem Ende zu dem anderen von einer Mischung des Lösungsmittels, das aus dem Behälter (11) stammt, mit der Flüssigkeit, die aus dem Einlasskanal (12) stammt, für eine Übertragung des Gases aus der Flüssigkeit auf das Lösungsmittel durchquert zu werden,
- einen Dekanter (16), der angeordnet ist, um durch einen Eingang (160) die Mischung des Lösungsmittels mit der Flüssigkeit aufzunehmen und dann durch Schwerkraft die Trennung der Mischung in zwei Phasen zu ermöglichen, von denen eine erste dichtere Phase, die das mit Gas angereicherte Lösungsmittel enthält, sich am Boden des Dekanters befindet, und eine zweite leichtere Phase, aufweisend die an Gas abgereicherte Flüssigkeit, sich an der Oberfläche des Dekanters befindet, wobei die erste Phase anschließend durch einen ersten Abfluss (161) und die zweite Phase durch einen zweiten Abfluss (162), der sich über dem ersten Abfluss befindet, abfließen gelassen wird,
- und ein Vertikalitätshalteelement (17), umfassend einen Arm (171), der in fester Verbindung mit dem Dekanter (16) steht und mit dem Gewicht (172) endet, das angeordnet ist, damit der Arm (171) parallel zu der vertikalen Richtung des Dekanters ist,
**dass** die Messvorrichtung eine Vorrichtung (3, 4, 5, 6) zur optischen Messung ist, umfassend:
- eine Messzelle (31, 41, 51, 61),
- ein Modul (32, 42) zur Zirkulierung des mit Gas angereicherten Lösungsmittels, das aus dem Dekanter (16) ausgegebenes Lösungsmittel in die Messzelle (31, 41, 51, 61) einspritzt,
- eine Lichtquelle (33, 43, 53, 63), die einen anfänglichen Lichtstrahl aussendet und so ausgerichtet ist, dass der anfängliche Lichtstrahl die Messzelle (31, 41, 51, 61) durchdringt,
- ein Mittel (34, 44, 54) zur Messung der Lichtintensität, das die Intensität des Lichtstrahls misst, der die Messzelle (31, 41, 51, 61) durchdrungen hat,
**und dass** sie ferner eine dichte Kammer (20, 301, 302, 40, 50) aufweist, die unter atmosphärischem Druck gehalten wird, umfassend elektronische oder optische Komponenten, die auf hydrostatischen Druck reagieren.

2. Messvorrichtung nach Anspruch 1, **dadurch gekennzeichnet, dass** das Modul zur Zirkulation des Lösungsmittels und der Flüssigkeit umfasst:
- ein Modul (14) zur Zirkulation des Lösungsmittels, umfassend eine erste Verbindung (141) mit dem Behälter (11) und eine zweite Verbindung (142) mit dem Gehäuse (13), wobei das Modul (14) zur Zirkulation des Lösungsmittels das Lösungsmittel aus dem Behälter (11) durch die erste Verbindung (141) ansaugt und das Lösungsmittel in die Kammer (13) durch die zweite Verbindung (142) einspritzt,
- ein Modul (15) zur Zirkulation der Flüssigkeit, umfassend eine erste Verbindung (151) mit dem Einlasskanal(12) und eine zweite Verbindung (152) mit dem Gehäuse (13), wobei das Modul (15) zur Zirkulation der Flüssigkeit die Flüssigkeit aus dem Einlasskanal (12) durch die erste Verbindung (151) ansaugt und die Flüssigkeit in die Kammer (13) durch die zweite Verbindung (152) einspritzt.

3. Messvorrichtung nach Anspruch 1 oder 2, **dadurch gekennzeichnet, dass** sich die röhrenförmige Kammer entlang einer Länge L erstreckt und einen Querschnitt der Oberfläche A vorweist, wobei das Verhältnis L/A größer als 100 mm⁻¹ und vorzugsweise größer als 1000 mm⁻¹, noch besser größer als 2000 mm⁻¹, ist.

4. Messvorrichtung nach einem der vorstehenden Ansprüche,
**dadurch gekennzeichnet, dass** das Modul (14, 15) zur Zirkulierung des Lösungsmittels und der Flüssigkeit eine Pumpe umfasst.

5. Messvorrichtung nach Anspruch 1, **dadurch gekennzeichnet, dass** die Lichtquelle (33, 43, 53, 63) eine Infrarotquelle ist.

6. Messvorrichtung nach Anspruch 1, **dadurch gekennzeichnet, dass** die Messvorrichtung (1) ferner umfasst:
- eine Trennplatte (56) stromaufwärtig der Messzelle (51), die den anfänglichen Lichtstrahl in einen Messstrahl, der die Messzelle (51) durchläuft, und einen anfänglichen Referenzstrahl, der die Messzelle (51) nicht durchdringt, aufteilt;
- einen ersten Spiegel (55) stromabwärtig der Messzelle (51), der den Messstrahl in einen reflektierenden Strahl in Richtung der Trennplatte (56) reflektiert;
- einen Verschluss (593), der einen geschlossenen Zustand, in dem er den Messstrahl unterbricht, bevor der Strahl die Messzelle (51) erreicht, und einen offenen Zustand, in dem der Messstrahl die Messzelle (51) durchdringt, vorweist; und
- einen zweiten Spiegel (57), der den anfänglichen Referenzstrahl in Richtung der Trennplatte (56) reflektiert, sodass die Trennplatte (56) den reflektierten Strahl mit dem reflektierten Referenzstrahl zu einem kombinierten Strahl kombiniert, dessen Lichtintensität dann durch das Messmittel (54) gemessen wird.

7. Verfahren zum Extrahieren in einer Wasserumgebung und unter hydrostatischem Druck in der Tiefe von in der Wasserumgebung gelöstem Gas mit einer Messvorrichtung nach einem der vorstehenden Ansprüche,
**dadurch gekennzeichnet, dass** das Extraktionsverfahren die folgenden Schritte umfasst:
- Einlassen von Flüssigkeit aus dem flüssigen Medium,
- Zirkulieren der Flüssigkeit und eines Lösungsmittels,
- Mischen des Lösungsmittels mit der Flüssigkeit zum Übertragen des Gases aus der Flüssigkeit in das Lösungsmittel,
- ein Dekantierungssystem in vertikaler Position zum Ermöglichen der Trennung der Mischung durch Schwerkraft in zwei Phasen, von denen eine das mit Gas angereicherte Lösungsmittel enthält und eine andere die an Gas abgereicherte Flüssigkeit aufweist, deren eine erste, dichtere Phase sich am Boden und eine zweite, leichtere Phase sich an der Oberfläche befindet.

8. Extraktionsverfahren nach dem vorstehenden Anspruch,
**dadurch gekennzeichnet, dass** das Lösungsmittel mit einem Durchflussstrom Qs in die Kammer eingespritzt wird und die Flüssigkeit mit einem Durchflussstrom Qe in die Kammer eingespritzt wird, wobei das Verhältnis (LxA)/Qs größer als 100 ist und das Verhältnis (LxA)/Qe größer als 100 ist.

9. Extraktionsverfahren nach Anspruch 8 oder 7,
**dadurch gekennzeichnet, dass** das Lösungsmittel ein inertes Produkt wie ein Fluorkohlenstoff ist.

## Claims

1. An apparatus for in situ measurement of the concentration of gas in an aquatic environment and under hydrostatic pressure, comprising:
- a device (1) for extracting gas dissolved in a liquid medium, the extraction device (1) comprising:
- a tank (11) intended to receive a solvent immiscible in the liquid,
- an intake channel (12) for taking in liquid from the liquid medium,
- a module (14, 15) for circulating the solvent and the liquid,
- and a device (2, 3, 4, 5, 6) for measuring the concentration of gas dissolved in the solvent;
the measurement apparatus being **characterized in that** the extraction device (1) further comprises:
- a tubular chamber (13) through which a mixture of the solvent coming from the tank (11) with the liquid coming from the intake channel (12) is intended to pass from one end to the other to transfer the gas from the liquid to the solvent,
- a decanter (16) arranged to receive, via an inlet (160), the mixture of the solvent with the liquid and then to allow the separation by gravity of the mixture into two phases, including a denser first phase, containing the gas-enriched solvent, located at the bottom of the decanter and a lighter second phase, comprising the gas-depleted liquid, located at the surface of the decanter, the first phase then being discharged via a first outlet (161) and the second phase being discharged via a second outlet (162) located above the first outlet,
- and a verticality-maintaining element (17) comprising an arm (171) rigidly connected to the decanter (16) and terminated by the weight (172) arranged so that the arm (171) is parallel to the vertical direction of the decanter,
**in that** the measurement device is a device (3, 4, 5, 6) for optical measurement comprising:
- a measurement cell (31, 41, 51, 61),
- a module (32, 42) that is intended for circulating the gas-enriched solvent and that injects the solvent from the decanter (16) into the measurement cell (31, 41, 51, 61),
- a light source (33, 43, 53, 63) that emits an initial light beam and that is oriented so that the initial light beam passes through the measurement cell (31, 41, 51, 61),
- a means (34, 44, 54) that is intended for measuring the light intensity and that measures the intensity of the light beam that has passed through the measurement cell (31, 41, 51, 61),
**and in that** it further comprises a sealed compartment (20, 301, 302, 40, 50) maintained at atmospheric pressure and comprising electronic or optical components sensitive to hydrostatic pressure.

2. The measurement apparatus according to claim 1, **characterized in that** the module for circulating the solvent and the liquid comprises:
- a module (14) for circulating the solvent, comprising a first connection (141) with the tank (11) and a second connection (142) with the chamber (13), the module (14) for circulating the solvent drawing the solvent from the tank (11) via the first connection (141) and injecting the solvent into the chamber (13) via the second connection (142),
- a module (15) for circulating the liquid, comprising a first connection (151) with the intake channel (12) and a second connection (152) with the chamber (13), the module (15) for circulating the liquid drawing the liquid from the intake channel (12) via the first connection (151) and injecting the liquid into the chamber (13) via the second connection (152),

3. The measurement apparatus according to claim 1 or 2,
**characterized in that** the tubular chamber extends along a length L and has a cross section of surface area A, the ratio L/A being greater than 100 mm⁻¹, and preferably greater than 1000 mm⁻¹, better still greater than 2000 mm⁻¹.

4. The measurement apparatus according to any of the preceding claims, **characterized in that** the module (14, 15) for circulating the solvent and the liquid comprises a pump.

5. The measurement apparatus according to claim 1, **characterized in that** the light source (33, 43, 53, 63) is an infrared source.

6. The measurement apparatus according to claim 1, **characterized in that** the measurement device (1) further comprises:
- a beam splitter (56) that is upstream of the measurement cell (51) and that divides the initial light beam into a measurement beam passing through the measurement cell (51) and an initial reference beam not passing through the measurement cell (51);
- a first mirror (55) that is downstream of the measurement cell (51) and that reflects the measurement beam into a beam reflected in the direction of the beam splitter (56);
- a shutter (593) having a closed state in which it interrupts the measurement beam before the beam reaches the measurement cell (51) and an open state in which the measurement beam passes through the measurement cell (51); and
- a second mirror (57) reflecting the initial reference beam in the direction of the beam splitter (56) so that the beam splitter (56) combines the reflected beam with the reflected reference beam into a combined beam, the light intensity of which is then measured by the measurement means (54).

7. A method for extracting, from an aquatic environment and under hydrostatic pressure at depth, gas dissolved in the aquatic environment with a measurement apparatus according to any of the preceding claims, **characterized in that** the extraction method comprises the following steps:
- taking in liquid from the liquid medium,
- circulating the liquid and a solvent,
- mixing the solvent with the liquid to transfer the gas from the liquid to the solvent,
- a settling system in the vertical position to allow the mixture to separate by gravity into two phases, one containing the gas-enriched solvent and another comprising the gas-depleted liquid, including a denser first phase located at the bottom and a lighter second phase located at the surface.

8. The extraction method according to the preceding claim,
**characterized in that** the solvent is injected into the chamber with a flow rate Qs and the liquid is injected into the chamber with a flow rate Qe, the ratio (LxA)/Qs being greater than 100 and the ratio (LxA)/Qe being greater than 100.

9. The extraction method according to claim 8 or 7, **characterized in that** the solvent is an inert product such as a fluorocarbon.
